# EUROPEAN PATENT SPECIFICATION

(11) **EP 2 536 574 B1**
(45) Date of publication and mention of the grant of the patent: **14.12.2016**
(21) Application number: 11705979.0
(22) Date of filing: 11.02.2011
(51) Int. Cl.: B30B 9/12, B30B 9/18

(54) **Sludge compactor, auger for sludge compactor and method of separating solids from a mixture using a sludge compactor**
Schlammverdichter, Schnecke für Schlammverdichter und Verfahren zum Abtrennen von Feststoffen aus einer Mischung unter Verwendung eines Schlammverdichters
Compacteur de boue, vis pour compacteur de boue et procédé de séparation des solides d'un mélange utilisant un compacteur de boue

(30) Priority: 16.02.2010 GB 201002621
(43) Date of publication of application: 26.12.2012
(73) Proprietor: Hydro International PLC, Clevedon BS21 7RD (GB)
(72) Inventor: FARAM, Michael, Guy, Portishead Bristol BS20 6QP (GB); MARTIN, Lorne, Bryan, Kings Lynn Norfolk PE30 3EL (GB)
(74) Representative: Chapman, Patrick
(86) International application number: PCT/GB2011/050264
(87) International publication number: WO 2011/101656

(56) References cited:
- WO-A1-97/13026
- DE-U1- 29 620 607
- FR-A1- 2 727 348
- JP-A- 6 292 997
- JP-A- 54 074 562
- JP-A- 2000 015 014
- JP-A- 2001 205 489
- JP-A- 2002 001 589
- JP-A- 2006 055 819
- US-A- 3 938 434
- US-A1- 2001 039 887

## Description

This invention relates to a sludge compactor and components thereof.

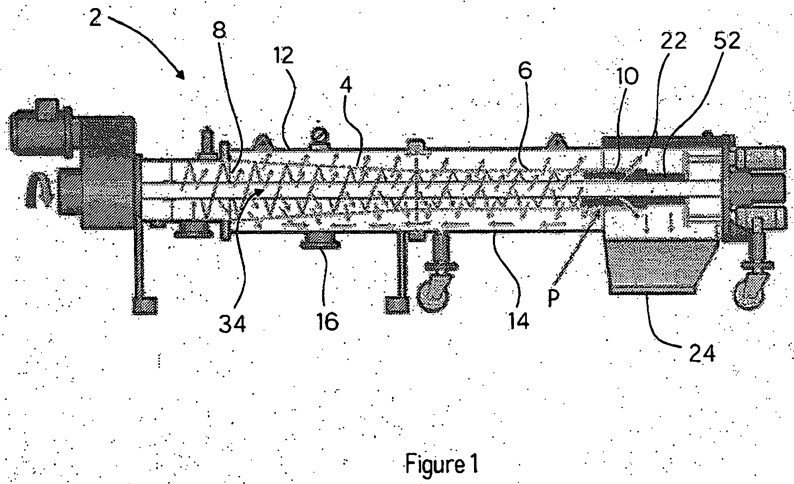

Separators which both separate solid material from waste water and compact the solid material for disposal are well-known from, for example, JP 2002 001589, US 2001/039887, JP 2006 005819, DE 296 20 607, US 3938434 and EP0560753. Such separators may be used, for example, to remove solids from a flow of sewage so that the water from the sewage can proceed to further treatment prior to discharge or reuse. The separated solids may be disposed of in landfill. An example of such a separator is the sludge compacting device shown in Figure 1. The sludge compacting device 2 comprises a perforated tubular screen 4, 6 having an inlet 8 at one end and a solids outlet 10 at the other end. The screen 4, 6 is disposed within a separation chamber 12, 14 provided with a fluids outlet 16 in the lower portion of the separation chamber 12, 14. The screen 4, 6 comprises a frusto-conical section 4 towards the inlet end of the screen and a cylindrical section 6 towards the solids outlet end. The frusto-conical section 4 tapers radially inwardly from the inlet end towards the cylindrical section 6. The frusto-conical section 4 is associated with a screening zone and the cylindrical section 6 is associated with a pressing zone. An auger 34 extends along the interior of the tubular screen 4, 6 and has a profile which corresponds to the profile of the screen 4, 6. A retention cone 52 is disposed at the solids outlet 10 to obstruct flow through the solids outlet 10. The retention cone 52 is adjustably biased by pneumatic cylinders in the axial direction to control the size of the annular aperture formed between the cone 52 and the cylindrical section 6 of the screen. An outlet chamber 22 is provided adjacent the solids outlet 10 for housing the retention cone 52 and for receiving solids passing through the solids outlet 10, for discharge through an opening 24 for treatment or disposal.

In use, a sludge comprising a fluid and a solid is fed into the inlet 8. The sludge is. conveyed by the auger 34 from the inlet 8 towards the solids outlet 10. As the sludge is conveyed along the screen 4, 6 the fluid flows through the perforations in the screen 4, 6 into the radially outer region of the separation chamber 12, 14. The fluid is then discharged from the outer region of the separation chamber 12, 14 through the fluids outlet 16. The solid particles which cannot pass through the screen 4, 6 are conveyed by the auger 34 along the cylindrical section 6 of the screen until they are obstructed by the retention cone 52. Obstruction by the cone 52 causes the solids to build up on the face of the cone 52 and compact to form a plug (P) which is compressed by the auger 34 to extract further liquid. The pressure applied by the auger 34 to the cone 52 causes the cone 52 to be displaced away from the screen 4, 6 to open, or increase the size of, the annular aperture to permit passage of the plug (P). Solids which pass through the outlet 10 are discharged from the separator through the outlet chamber 22.

A problem associated with this separator, and similar separators, is that the cleanliness of the discharged solids is often unacceptable: for example, when such a separator is used to process biological material the quantity of faecal content in the discharged solids is excessive, and so is not acceptable for landfill.

According to a first aspect of the present invention there is provided a sludge compactor in accordance with claim 1.

In operation of a sludge compactor in accordance with the present invention, the washing fluid penetrates the.solids and is subsequently discharged through the screen with the separated fluid from the mixture. Consequently, the solids are washed by the washing fluid and emerge in a relatively clean condition.

The shaft may be provided with a passage for conveying the washing fluid to at least one of the delivery devices.

At least one delivery device may be provided on the tubular screen. The screen may be disposed within an outer casing, in which case at least one delivery device may be provided on the outer casing and directed towards the screen.

At least one of the delivery devices may be disposed to discharge fluid in a radial direction, a direction which is tangential to the auger or in an axial direction. A delivery device or at least one of the delivery devices disposed to discharge fluid in the axial direction may be disposed to eject fluid towards the inlet.

The auger may be provided with agitators. The agitators may be in the form of baffles or paddles which extend along a portion of the auger or in the form of pegs. The agitators may be provided along a portion of the auger not having a flight. The portion of the screen surrounding the agitators may be non-permeable so as to prevent flow of fluid from the interior of the screen to the exterior of the screen in the vicinity of the agitators.

The sludge compactor may be disposed within a chamber for collecting the separated fluid, the chamber being provided with a fluid outlet for discharging the separated fluid from the.chamber. Means may be provided to supply the discharged separated fluid as the washing fluid to at least one of the delivery devices.

According to another aspect of the present invention, there is provided an auger for a sludge compactor according to the first aspect of the invention in which the auger has a passage for conveying a washing fluid to at least one of the delivery devices provided at a surface of the auger. Washing fluid delivery devices are provided at a surface of the shaft and are arranged along the surface of the shaft in a spiral which corresponds with, but is offset from, a spiral formed by the flight for delivering washing fluid into the interior of the tubular screen. The flight of the auger is provided with slots or apertures which are arranged such that, in use, washing fluid slows flows through the slots or apertures across the flight.

According to a further aspect of the invention, there is provided a method of separating solids from a mixture using a sludge compactor according to the first aspect of the invention, in which a washing fluid is supplied through at least one of the delivery devices into the interior of the screen. The washing fluid may be hotter than the mixture, and may comprise an additive such as a detergent, biocide, coagulant or combination thereof.

For a better understanding of the present invention and to show more clearly how it may be carried into effect, reference will now be made, by way of example, to the accompanying drawings, in which:-
Figure 1 shows a known separator;
Figure 2 shows a separator in accordance with the present invention;
Figure 3 is a perspective view of a portion of an auger of the separator shown in Figure 2;
Figure 4 is a partial sectional view of a variant of the separator shown in Figure 2;
Figure 5 shows a further variant of the separator shown in Figure 2; and
Figure 6 shows a sectional view of the separator taken on the line X-X in Figure 5.

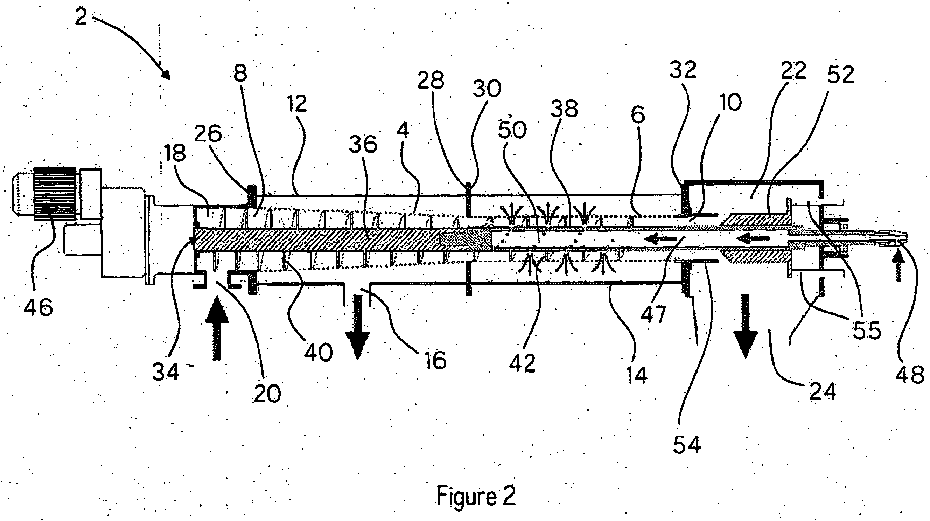

Figure 2 shows a separator 2 comprising a perforated tubular screen 4, 6 having an inlet 8 at one end and a solids outlet 10 at the other. The tubular screen 4, 6 is disposed within a cylindrical separation chamber 12, 14 such that an annular region is created between the screen 4, 6 and the outer wall of the separation chamber 12, 14. The interior of the screen 4, 6 is in communication with the annular region through the perforations in the screen 4, 6. A fluids outlet 16 is provided in the lower region of the outer wall of the separation chamber 12, 14.

The inlet 8 opens through an end wall of the separation chamber 12, 14 into an inlet chamber 18. The inlet chamber 18 is provided with an inlet port 20 for an inflowing mixture. The solids outlet 10 opens through the other end wall of the separation chamber 12, 14 into an outlet chamber 22. The outlet chamber 22 is provided with an outlet port 24 through which solids may be discharged.

The screen 4, 6 comprises two sections: a frusto-conical section 4 and a cylindrical section 6. The frusto-conical section 4 tapers radially inwardly away from the inlet 8 towards the cylindrical section 6. The diameter of the frusto-conical section 4 adjacent the cylindrical section 6 corresponds to the diameter of the cylindrical section 6. The frusto-conical section 4 and the cylindrical section 6 are separable.

An auger 34 is disposed within the tubular screen 4, 6 and extends along the entire length of the separator 2. The auger 34 is supported for rotation at each end by bearings, and driven by a motor 46 disposed adjacent the inlet chamber 18.

The auger 34 comprises two sections: a first section comprising a first shaft 36 and a first flight 40, and a second section comprising a second shaft 38 and a second flight 42. The second shaft 38 is dowelled with the first shaft 36 so that the two shafts 36, 38 are aligned and rotate together. The first and second shafts 36, 38 are separable from each other. The flights 40, 42 are helical and arranged so as to form a continuous flight which extends through the inlet chamber 16 and through a substantial portion of the screen 4, 6.

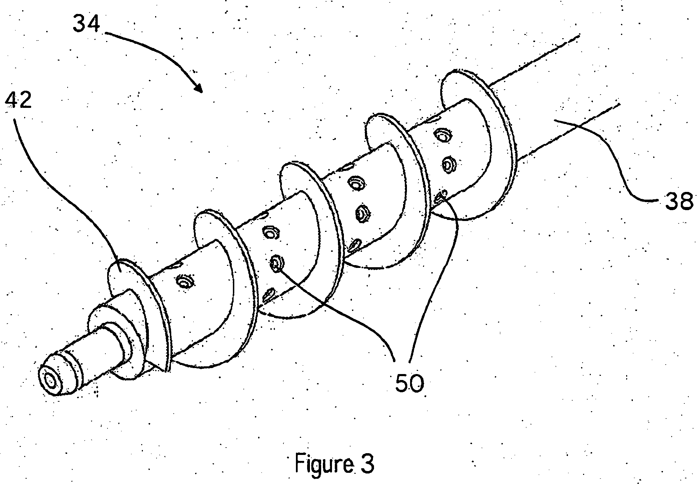

The second shaft 38 is hollow and so provides a longitudinal passage 47 which has a shaft inlet 48 provided at the end supported by the bearing. The shaft inlet 48 enables a washing fluid to be supplied to the passage 47. A plurality of holes 50 fitted with nozzles (not shown) extend through the cylindrical wall of the second shaft 30, through which the washing fluid is ejected into the interior of the cylindrical screen section 6. In this instance, the second shaft 38 is a hollow tube so that the passage 47 comprises the interior of the tube; however, it will be appreciated that any suitable conduit between the shaft inlet 48 and the nozzles 50 could be provided. Figure 3 shows the holes 50 arranged along the surface of the second shaft 38 in a spiral which corresponds with, but is offset from, the spiral formed by the second flight 42.

Referring to Figure 2, a frusto-conical retention cone 52 is provided at the solids outlet 10 to obstruct flow through the solids outlet 10. The retention cone 52 cooperates with a solid-walled extension 54 of the screen 4, 6 which extends into the outlet chamber 22. The retention cone 52 is movable in the axial direction with respect to the solid-walled extension 54 and is biased towards the extension 54 by pneumatic cylinders acting on piston rods 55. The pressure applied by the pneumatic cylinders may be varied.

The separation chamber 12,14 comprises a first section 12 and a second section 14. The first and second sections 12, 14 are provided with flanges 26, 28 and 30, 32 respectively. The first and second sections 12, 14 are secured to each other, and to the inlet and outlet chambers 16, 20, by bolts passing through the flanges 26, 28, 30, 32 or other releasable joining mechanism. The separator is thus separable into a first section comprising the first shaft 36 and the frusto-conical section of the screen 4 and a second section comprising the second shaft 38 and the cylindrical section of the screen 6.

In use, a sludge, for example sewage sludge, comprising a mixture of solids and a fluid such as water is fed through the inlet port 20 into the inlet chamber 18. Rotation of the auger 34 with respect to the screen 4, 6 draws the sludge from the inlet chamber 18 along the inside of the screen 4, 6. The frusto-conical section of the screen 4 constitutes a screening zone. As the sludge is conveyed along the frusto-conical section of the screen 4, water is expelled from the sludge through the screen perforations. Water which passes through the screen perforations collects in the bottom of the separation chamber 12, 14 from where it is discharged through the fluids outlet 16. This discharged fluid may be subject to further treatment.

The auger 34 forces the remaining relatively dewatered sludge along the cylindrical section 6 of the screen towards the solids outlet 10. The cylindrical section 6 constitutes a pressing zone. As the sludge is conveyed along the cylindrical section 6, a washing fluid is supplied through the shaft inlet 48 and along the passage 47 to be delivered through the nozzles in the holes 50 into the interior of the cylindrical section 6. The washing fluid penetrates into the sludge and so agitates the sludge. Some components of the sludge, such as liquid or semi liquid faecal matter, are dislodged from the particles of the sludge and so are flushed out or diluted. In some embodiments, the water discharged through the fluids outlet 16 may be used as the washing fluid, but alternatively, clean water.(for example mains water) may be used. In some circumstance, the washing fluid may include additives such as detergents, biocides or coagulants. The washing fluid may be heated, for example to assist in the flushing of fat, oil and grease from the sludge particles, the screening elements 4, 6 and perforations and the separator 2 as a whole.

The retention cone 52 obstructs flow through the solids outlet 10 thereby causing the solids to build-up and press against the face of the retention cone 52. This further expels fluid, including the washing fluid introduced during the cleaning process, through the screen perforations, and also compacts the solids. As the pressure of the accumulated solids increases, the retention cone 52 is displaced against the bias of the pneumatic cylinders to allow the compacted solids to pass between the retention cone 52 and the solid-walled screen extension 54 so as to be discharged from the outlet chamber 22 through the outlet port 24. The solids may be subject to further processing.

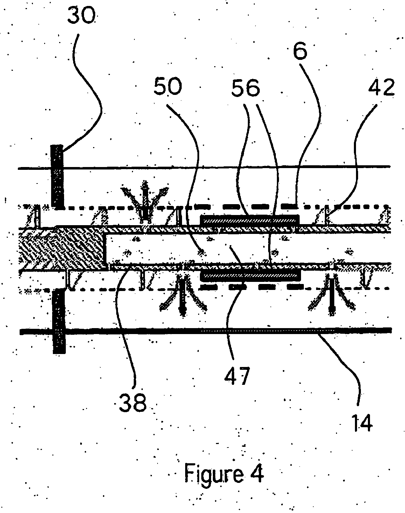

Figure 4 shows a variant in which the separator includes a mixing zone between the screening and pressing zones. A portion of the auger flight on the second shaft 38 is replaced by agitators 56 in the form of baffles. In this variant, the baffles 56 are circumferentially spaced apart and extend along the second shaft 38 in an axial direction. The baffles 56 extend radially outwardly from the second shaft 38 and terminate at or short of the cylindrical section 6. In operation, the baffles 56 agitate the mixture thereby improving the washing effect of the washing fluid. As an alternative to the baffles 56, alternative forms of agitator may be used, for example pegs. The baffles, or alternative forms of agitator, may be situated within a portion of the screen 4, 6 which is non-permeable, i.e. does not have perforations, in order to retain water in the sludge as it is agitated.

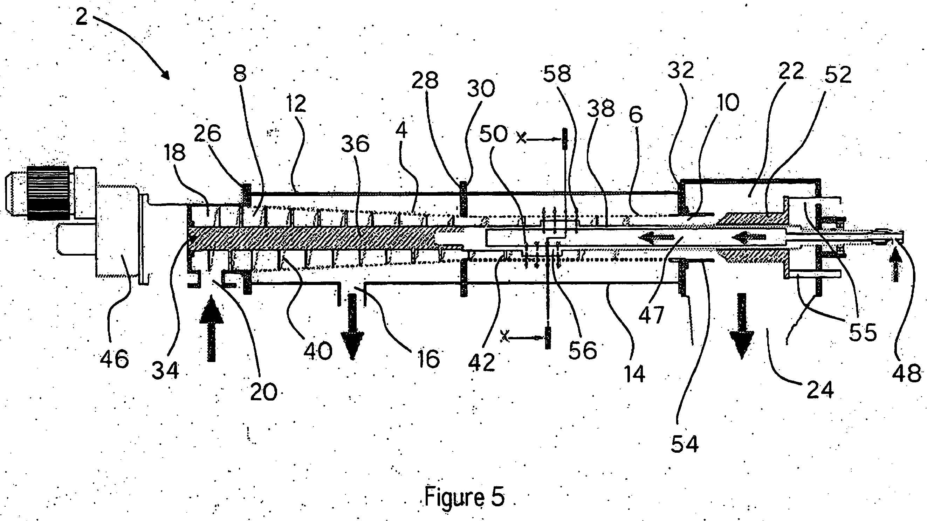

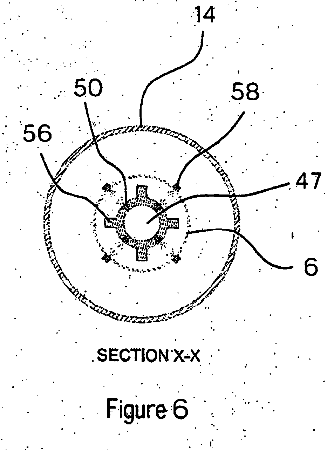

Figures 5 and 6 show a further variant in which part of the second flight 42 in the region of the nozzles 50 has been replaced by baffles 56, similar to those shown in Figure 4, which extend along the second shaft 38 in an axial direction. In this variant, baffles 56 that are diametrically opposite one another are offset with respect to one anther in an axial direction. In addition to the nozzles in the holes 50 provided on the second shaft 38, further nozzles 58 are provided along the radially outer wall of the screen cylindrical portion 6. These nozzles 58 are directed radially inwardly towards the shaft 38.

Although not shown, it is also possible for nozzles to be provided on the wall if the separation chamber 12, 14 directed to eject washing fluid into the accumulated solids through the perforations of the cylindrical section 6.

In the embodiments shown in the drawings, the nozzles are oriented to eject the Washing fluid in a generally radial direction (inwardly or outwardly). In alternative embodiments, the nozzles may be oriented differently for example to direct the washing fluid with an axial or tangential component. In one embodiment, the shaft 36, 38 may have a radial projection supporting a nozzle oriented to direct the washing fluid in an axial direction, possibly in the upstream direction with respect to the movement of sludge through the separator.

Although the embodiments shown in the drawings have nozzles for washing fluid in the pressing zone of the separator, such nozzles may alternatively, or additionally, be provided in the screening zone. The washing fluid supply may be introduced to the auger 34 at the end nearer the motor 46, rather than the end nearer the retention cone 52, as shown.

The flight 40 of the auger 34 is interrupted along its length for example, by slots or apertures to enable introduced washing fluid to migrate through the sludge in the upstream direction.

## Claims

1. A sludge compactor (2) comprising:
a perforated tubular screen (4, 6),
an inlet (8) for mixture to be separated opening into the interior of the screen,
a solids outlet (10) situated at one end of the screen (4, 6),
a retention cone (52) disposed at the solids outlet (10) and arranged to obstruct flow through the solids outlet(10), and
an auger (34) disposed within the tubular screen (4, 6) for conveying solids retained by the screen from the inlet to the solids outlet, the auger (34) having a shaft (36, 38) provided with a flight (40, 42), and
a plurality of washing fluid delivery devices each comprising a hole (50), the holes of the washing fluid delivery devices being provided at a surface of the shaft (36,38) and arranged along the surface of the shaft (36, 38) in a spiral which corresponds with, but is offset from, a spiral formed by the flight for delivering washing fluid into the interior of the tubular screen (4, 6),
wherein the flight (40, 42) of the auger (34) is provided with slots or apertures which are arranged such that, in use, washing fluid flows through the slots or apertures across the flight (40, 42).

2. A sludge compactor (2) according to claim 1, in which the shaft (38) is provided with a passage (47) for conveying the washing fluid to at least one of the delivery devices (50).

3. A sludge compactor (2) according to any one of the preceding claims, in which at least one delivery device (58) is provided on the tubular screen (6).

4. A sludge compactor (2) according to any one of the preceding claims, in which the screen (4, 6) is disposed within an outer casing (6), and at least one delivery device (58) is provided on the outer casing and directed towards the screen (4, 6).

5. A sludge compactor (2) according to any one of the preceding claims, in which at least one of the delivery devices (50) is disposed to discharge fluid in a radial direction.

6. A sludge compactor (2) according to any one of the preceding claims, in which at least one of the delivery devices (50) is disposed to discharge fluid in a direction which is tangential to the auger.

7. A sludge compactor (2) according to any one of the preceding claims, in which at least one of the delivery devices (50) is disposed to discharge fluid in an axial direction.

8. A sludge compactor (2) according to claim 7, in which the delivery device, or at least one of the delivery devices (50) disposed to discharge fluid in the axial direction, is disposed to eject fluid towards the inlet (8).

9. A sludge compactor (2) according to any one of the preceding claims, in which the auger (34) is provided with agitators (56).

10. A sludge compactor (2) according to claim 9, in which the agitators (56) are provided along a portion of the auger (34) not having a flight.

11. A sludge compactor (2) according to claim 9 or 10, in which the portion of the screen (4, 6) surrounding the agitators (56) is non-permeable, said portion of the screen (4,6) being arranged to prevent flow of fluid from the interior of the screen (4, 6) to the exterior of the screen in the vicinity of the agitators (56).

12. A sludge compactor (2) according to any one of the preceding claims, in which the sludge compactor (2) is disposed within a chamber (12,14) for collecting the separated fluid and in which the chamber is provided with a fluid outlet (20) for discharging the separated fluid from the chamber (12, 14).

13. A sludge compactor (2) according to claim 12, in which means is provided to supply the discharged fluid as the washing fluid to at least one of the delivery devices (50).

14. An auger (34) for a sludge compactor (2) according to any one of the preceding claims, in which the auger (34) has:
a passage (47) for conveying a washing fluid to at least one of the delivery devices (50) provided at a surface of the auger (40), and
a plurality of washing fluid delivery devices each comprising a hole (50), the holes of the washing fluid delivery devices being provided at a surface of the shaft (36,38) and arranged along the surface of the shaft (36, 38) in a spiral which corresponds with, but is offset from, a spiral formed by the flight for delivering washing fluid into the interior of the tubular screen (4, 6),
wherein the flight (42) of the auger (34) is provided with slots or apertures which are arranged such that, in use, washing fluid flows through the slots or apertures across the flight (42).

15. A method of separating solids from a mixture using a sludge compactor (2) according to any one of claims 1 to 13, in which a washing fluid is supplied through at least one of the delivery devices (50) into the interior of the screen (4,6).

16. A method according to claim 15, in which the washing fluid is supplied at a temperature which is higher than the temperature of the mixture.

17. A method according to claim 15 or 16, in which the washing fluid comprises an additive.

18. A method according to claim 17, in which the additive is a detergent, biocide, coagulant or combination thereof.

## Patentansprüche

1. Ein Schlammverdichter (2) bestehend aus:
einem rohrförmigen Lochsieb (4, 6),
einem Eingang (8) zum Abtrennen der Mischung, der in das Innere des Siebs leitet, einem Ausgang für die Feststoffe (10) an einem Ende des Siebs (4, 6),
einem Rückhaltekegel (52) am Feststoff-Ausgang angeordnet (10) und dazu ausgelegt den Durchfluss durch den Feststoff-Ausgang zu versperren (10), und
einer Förderschnecke (34) im Inneren des rohrförmigen Siebs (4,6) zur Förderung der im Sieb zurückgehaltenen Feststoffe vom Eingang zum Feststoff-Ausgang, die Förderschnecke (34) mit Schneckenwelle (36, 38) mit einem Gewinde (40, 42), und eine Vielzahl an Waschflüssigkeits-Abgabevorrichtungen, deren jede über eine Öffnung (50) verfügt, wobei sich die Öffnungen der Waschflüssigkeits-Abgabevorrichtung an der Oberfläche der Welle (36,38) befinden und entlang der Wellenoberfläche (36,38) spiralförmig angebracht sind, entsprechend, doch von der vom Gewinde gebildeten Spirale für die Abgabe von Waschflüssigkeit in das Innere des rohrförmigen Siebelements versetzt (4, 6), worin das Gewinde (40,42) der Förderschnecke (34) mit Schlitzen oder Öffnungen versehen ist, die so angeordnet sind, dass während der Benutzung Waschflüssigkeit mittels der Schlitze oder Öffnungen durch das Gewinde fließt (40, 42).

2. Ein Schlammverdichter (2) gemäß Patentanspruch 1, bei dem die Welle (38) mit einem Durchlass (47) für das Fördern der Waschflüssigkeit zu mindestens einer der Abgabevorrichtungen (50) vorgesehen ist.

3. Ein Schlammverdichter (2) gemäß einem der vorstehenden Patentansprüche, bei dem auf dem rohrförmigen Siebelement (6) mindestens eine Abgabevorrichtung (58) vorgesehen ist.

4. Ein Schlammverdichter (2) gemäß einem der vorstehenden Patentansprüche, bei dem das Siebelement (4,6) in einem Außengehäuse (6) untergebracht ist und mindestens eine Abgabevorrichtung (58) auf dem Außengehäuse vorgesehen und auf das Siebelement (4,6) ausgerichtet ist.

5. Ein Schlammverdichter (2) gemäß einem der vorstehenden Patentansprüche, bei dem mindestens ein Abgabegerät (50) angebracht ist, um Flüssigkeit in radialer Richtung abzugeben.

6. Ein Schlammverdichter (2) gemäß einem der vorstehenden Patentansprüche, bei dem mindestens ein Abgabegerät (50) angebracht ist, Flüssigkeit in einer Richtung abzugeben, die tangential zum Schneckenförderer liegt.

7. Ein Schlammverdichter (2) gemäß einem der vorstehenden Patentansprüche, bei dem mindestens ein Abgabegerät (50) angebracht ist, um Flüssigkeit in axialer Richtung abzugeben.

8. Ein Schlammverdichter (2) gemäß Patentanspruch 7, bei dem das Abgabegerät, oder mindestens eines der Abgabegeräte (50) für die Abgabe von Flüssigkeit in axialer Richtung angeordnet ist, um Flüssigkeit in Richtung Eingang (8) auszustoßen.

9. Ein Schlammverdichter (2) gemäß einem der vorstehenden Patentansprüche, bei dem die Förderschnecke (34) mit Rührwerken (56) ausgerüstet ist.

10. Ein Schlammverdichter (2) gemäß Patentanspruch 9, bei dem die Rührwerke (56) entlang einem Teil der Förderschnecke (34) ohne Gewinde vorgesehen sind.

11. Ein Schlammverdichter (2) gemäß Patentanspruch 9 oder 10, bei dem der Teil des Siebelements (4, 6) um die Rührwerke (56) undurchlässig ist, und dieser besagte Teil des Siebelements (4,6) ausgebildet ist, um ein Ausfließen von Flüssigkeit aus dem Inneren des Siebelements (4,6) auf die Außenseite des Siebelements in der Nähe der Rührwerke (56) zu verhindern.

12. Ein Schlammverdichter (2) gemäß einem der vorstehenden Patentansprüche, bei dem der Schlammverdichter (2) zum Sammeln der getrennten Flüssigkeit in einer Kammer (12,14) untergebracht ist und bei dem die Kammer mit einem Flüssigkeitsauslaß (20) versehen ist zur Entfernung der abgeschiedenen Flüssigkeit aus der Kammer (12, 14).

13. Ein Schlammverdichter (2) gemäß Patentanspruch 12, bei dem Mittel vorgesehen sind, die abgeschiedene Flüssigkeit als Waschflüssigkeit mindestens an eines der Abgabegeräte (50) zu führen.

14. Eine Förderschnecke (34) für einen Schlammverdichter (2) gemäß einem der vorstehenden Patentansprüche, wo die Förderschnecke (34) über folgendes verfügt:
einen Durchlass (47) für die Zufuhr von Waschflüssigkeit zu mindestens einem der Abgabegeräte (50) an der Oberfläche der Förderschnecke (40), und
eine Vielzahl von Waschflüssigkeits-Abgabevorrichtungen, deren jede eine Öffnung (50) hat, wobei die Öffnungen der Waschflüssigkeits-Abgabevorrichtungen an einer Oberfläche der Welle (36,38) vorgesehen und
entlang der Oberfläche der Welle (36, 38) spiralförmig angeordnet sind, entsprechend, doch von der vom Gewinde gebildeten Spirale für die Abgabe von Waschflüssigkeit in das Innere des rohrförmigen Siebelements versetzt (4,6), worin das Gewinde (40,42) der Förderschnecke (34) mit Schlitzen oder Öffnungen versehen ist, die so angeordnet sind, dass während der Benutzung Waschflüssigkeit mittels der Schlitze oder Öffnungen durch das Gewinde fließt (42).

15. Eine Methode zur Trennung von Feststoffen von einer Mischung unter Verwendung eines Schlammverdichters (2) gemäß einem der Patentansprüche 1 bis 13, bei dem eine Waschflüssigkeit durch mindestens eines der Abgabegeräte (50) in das Innere des Siebelements (4,6) befördert wird.

16. Eine Methode gemäß Patentanspruch 15, bei der eine Waschflüssigkeit mit einer Temperatur zugeführt wird, die höher liegt als die der Mischung.

17. Eine Methode gemäß den Patentansprüchen 15 oder 16, bei der die Waschflüssigkeit ein Zusatzmittel enthält.

18. Eine Methode gemäß Patentanspruch 17, bei dem das Zusatzmittel ein Reinigungsmittel, ein Biozid, ein Gerinnungsmittel oder eine Kombination daraus ist.

## Revendications

1. Un compacteur de boue (2), comprenant:
un écran tubulaire perforé (4, 6),
une entrée (8) pour le mélange à séparer débouchant à l'intérieur de l'écran,
une sortie de solides (10) située à une extrémité de l'écran (4, 6),
un cône de rétention (52) disposé à la sortie de solides (1,0) et agencé de manière à obstruer l'écoulement à travers la sortie de solides (10), et
une tarière (34) disposée à l'intérieur de l'écran tubulaire [(4, 6) pour transporter des matières solides retenues par l'écran de l'entrée à la sortie de solides], la tarière (34) ayant un arbre (36; 38) muni d'une spire (40, 42), et
une pluralité de dispositifs de distribution de fluide de lavage comprenant chacun un trou (50), les trous des dispositifs de distribution de fluide de lavage étant prévus à une surface de l'arbre (36,38) et disposés le long de la surface de l'arbre (36, 38) en spirale qui correspond, mais est décalé par rapport à lui, à une spirale formée par la spire pour délivrer un fluide de lavage à l'intérieur de l'écran tubulaire (4, 6),
dans lequel la spire (40, 42) de la tarière (34) est pourvue de fentes ou d'ouvertures qui sont disposées de telle sorte que, en utilisation, le fluide de lavage circule à travers les fentes ou ouvertures à travers la spire (40, 42).

2. Un compacteur de boue (2) selon la revendication 1, dans lequel l'arbre (38) est pourvu d'un passage (47) pour transporter le fluide de lavage à au moins un des dispositifs de distribution (50).

3. Un compacteur de boue (2) selon n'importe laquelle des revendications précédentes, dans lequel au moins un dispositif de distribution (58) est prévu sur l'écran tubulaire (6).

4. Un compacteur de boue (2) selon n'importe laquelle des revendications précédentes, dans lequel l'écran (4, 6) est disposé à l'intérieur d'une enveloppe extérieure (6), et au moins un dispositif de distribution. (58) est prévu sur l'enveloppe extérieure et dirigé vers l'écran (4, 6).

5. Un compacteur de boue (2) selon n'importe laquelle des revendications précédentes, dans lequel au moins l'un des dispositifs de distribution (50) est disposé de manière à décharger le fluide dans une direction radiale.

6. Un compacteur de boue (2) selon n'importe laquelle des revendications précédentes, dans lequel au moins l'un des dispositifs de distribution (50) est disposé pour décharger le fluide dans une direction qui est tangente à la tarière.

7. Un compacteur de boue (2) selon n'importe laquelle des revendications précédentes, dans lequel au moins l'un des dispositifs de distribution (50) est disposé de manière à décharger le fluide dans une direction axiale.

8. Un compacteur de boue (2) selon la revendication 7, dans lequel le dispositif de distribution, ou au moins un des dispositifs de distribution (50) disposés pour évacuer le fluide dans la direction axiale, est disposé à éjecter le fluide vers l'entrée (8).

9. Un compacteur de boue (2) selon n'importe laquelle des revendications précédentes, dans lequel la tarière (34) est munie d'agitateurs (56).

10. Un compacteur de boue (2) selon la revendication 9, dans lequel les agitateurs (56) sont prévus le long d'une partie de la tarière (34) n'ayant pas de spire.

11. Un compacteur de boue (2) selon la revendication 9 ou 10, dans laquelle: la partie de l'écran (4, 6) entourant les agitateurs (56) est non perméable, ladite partie de l'écran (4, 6) étant agencée de manière à empêcher un écoulement de fluide depuis l'intérieur de l'écran (4, 6) vers l'extérieur de l'écran à proximité des agitateurs (56).

12. Un compacteur de boue (2) selon n'importe laquelle des revendications précédentes, dans lequel le compacteur de boue (2) est disposé dans une chambre (12, 14) destiné à recueillir le fluide séparé et dans lequel la chambre est pourvue d'une sortie de fluide (20) pour évacuer le fluide séparé de la chambre (12, 14).

13. Un compacteur de boue (2) selon la revendication 12, dans lequel des moyens sont prévus pour alimenter le fluide déchargé en tant que fluide de lavage pour au moins l'un des dispositifs de distribution (50).

14. Une tarière (34) pour un compacteur de boue (2) selon l'une quelconque des revendications précédentes, dans lequel la tarière (34) comporte:
un passage (47) pour transporter un fluide de lavage à au moins l'un des dispositifs de distribution (50) prévus au niveau d'une surface de la tarière (40), et
une pluralité de dispositifs de distribution de liquide de lavage comportant chacun un trou (50), les trous des dispositifs de distribution de liquide de lavage étant prévus à une surface de l'arbre (36,38) et disposés le long de la surface de l'arbre (36, 38) en spirale qui correspond, mais est décalé par rapport à lui, à une spirale formée par la spire pour distribuer un fluide de lavage dans la l'intérieur de l'écran tubulaire (4, 6),
dans lequel la spire (42) de la tarière (34) est pourvue de fentes ou d'ouvertures qui sont disposées de telle sorte que, en utilisation, le fluide de lavage circule à travers les fentes ou ouvertures à travers la spire (42).

15. Une méthode de séparation des solides d'un mélange en utilisant un compacteur de boue (2) selon n'importe laquelle des revendications 1 à 13, dans laquelle un fluide de lavage est alimenté à travers au moins l'un des dispositifs de distribution (50) à l'intérieur de l'écran (4,6).

16. Une méthode selon la revendication 15, dans laquelle le fluide de lavage est amené à une température qui est supérieure à la température du mélange.

17. Une méthode selon la revendication 15 ou 16, dans laquelle le fluide de lavage comprend un additif.

18. Une méthode selon la revendication 17, dans laquelle l'additif est un détergent, un biocide, un coagulant ou une combinaison de ceux-ci.
